(19) Europäisches Patentamt
European Patent Office
Office européen des brevets

(11) **EP 1 956 257 B1**

(12) **FASCICULE DE BREVET EUROPEEN**

(45) Date de publication et mention
de la délivrance du brevet:
**20.03.2013 Bulletin 2013/12**

(51) Int Cl.:
*F16C 35/00* *(2006.01)*   *F16C 35/04* *(2006.01)*
*F16F 1/02* *(2006.01)*   *F16C 33/62* *(2006.01)*

(21) Numéro de dépôt: **08290048.1**

(22) Date de dépôt: **21.01.2008**

(54) **Dispositif de palier à roulement**

Lagervorrichtung mit einem Wälzlager

Antifriction bearing device.

(84) Etats contractants désignés:
**AT BE BG CH CY CZ DE DK EE ES FI FR GB GR HR HU IE IS IT LI LT LU LV MC MT NL NO PL PT RO SE SI SK TR**

(30) Priorité: **24.01.2007 FR 0752868**

(43) Date de publication de la demande:
**13.08.2008 Bulletin 2008/33**

(73) Titulaire: **Aktiebolaget SKF**
**415 50 Göteborg (SE)**

(72) Inventeurs:
• **Tanke, Jesko-Henning**
**89200 Avallon (FR)**
• **Ovize, Pascal**
**89500 Chitry le Fort (FR)**

(74) Mandataire: **Casalonga, Axel**
**Casalonga & Partners**
**Bayerstrasse 73**
**80335 München (DE)**

(56) Documents cités:
**FR-A- 1 480 448   FR-A- 2 695 176**
**GB-A- 951 917   GB-A- 1 106 018**
**US-A- 3 253 907   US-A- 5 913 392**
**US-A- 5 976 709   US-A1- 2006 269 180**

EP 1 956 257 B1

**Description**

La présente invention concerne le domaine des paliers à roulement utilisés en particulier dans des dispositifs d'imagerie médicale tels que des scanners.

De tels roulements présentent généralement un diamètre important, de l'ordre d'un mètre, et tournent à une vitesse de quelques centaines de tours/minute, par exemple entre 200 et 300.

Les exigences de précision et de robustesse imposent l'utilisation de roulements suffisamment rigides comportant un grand nombre d'éléments roulants. On pourra à cet égard se référer au document US 4, 458, 959 qui décrit un palier à roulement de diamètre important comprenant une pluralité de bagues comportant chacune un profilé creux. Toutefois, du fait de leur grand diamètre, de tels roulements ont tendance à transmettre des vibrations au portique sur lequel ils sont montés lors de l'utilisation du dispositif. Par effet de résonance et d'amplification, le portique génère à son tour un bruit souvent mal perçu par le patient et le personnel médical.

Dans les dispositifs de l'art antérieur, on a essayé de réduire le bruit en disposant des couches de matériau souple amortisseur, par exemple en élastomère, entre les chemins de roulement et les bagues. On peut se référer au document EP 127 879, qui prévoit un chemin de roulement formé à un fil d'acier muni d'une garniture intérieure réalisée sous forme d'un coussin tubulaire comprimé, ou encore le document US 2005/8274, qui prévoit un coussin annulaire résilient en contact avec le fil annulaire formant chemin de roulement.

De tels systèmes contribuent à abaisser le niveau du bruit et des vibrations, mais on cherche encore à réduire ces niveaux sonores et vibratoires.

L'invention vise à remédier à ces inconvénients.

L'invention propose un palier à roulement à très haut effet d'amortissement des vibrations, en particulier des vibrations de roulement.

Le dispositif de palier à roulement comprend une bague extérieure dont le corps principal comporte un ou plusieurs éléments, une bague intérieure dont le corps principal comporte un ou plusieurs éléments, les bagues extérieure et intérieure comprenant chacune au moins un chemin de roulement, intégré ou rapporté, pour des éléments roulants disposés entre lesdites bagues au contact des chemins de roulement. Au moins un des éléments formant le corps principal ci-dessus comprend un matériau métallique à coefficient d'amortissement vibratoire supérieur à 0,0001.

Préférablement, le coefficient d'amortissement vibratoire est supérieur ou égal à 0,001. Plus préférablement encore, le coefficient d'amortissement vibratoire est supérieur ou égal à 0,01. On entend par coefficient d'amortissement vibratoire, le rapport entre l'énergie acoustique émise par un échantillon du matériau considéré et l'énergie vibratoire reçue par ledit échantillon. Le coefficient d'amortissement vibratoire est donc le quotient d'une énergie par une énergie et s'exprime sans unité.

L'amortissement d'une paroi ou d'un matériau caractérise sa capacité à dissiper une plus ou moins grande quantité d'énergie vibratoire lorsqu'elle est mise en mouvement par une excitation acoustique ou mécanique.

Une paroi peu ou pas amortie aura une grande aptitude à émettre un rayonnement acoustique en cas d'excitation. A l'inverse, une paroi très amortie cesse de vibrer dès qu'on supprime l'excitation.

La capacité d'amortissement d'un matériau est caractérisée par son facteur de perte $\eta$. Elle peut dépendre également du module de Young (E) exprimé en daN/cm$^2$.

Les valeurs de ces caractéristiques propres à chaque matériau varient en fonction de la fréquence mais aussi de la température.

$\eta$ peut se définir par la formule suivante :

$$\eta = Wloss/2 \cdot PI \cdot W2 \left( \frac{Wloss}{2\Pi W2} \right)$$

Avec Wloss : l'énergie perdue, et W2 : l'énergie récupérée

Dans un mode de réalisation, ledit matériau comprend de la fonte, préférablement de la fonte grise. La fonte peut comprendre du graphite lamellaire ou nodulaire. A titre d'exemple, on peut utiliser de la fonte GG40.

Dans un mode de réalisation, le matériau comprend un alliage manganèse-cuivre, par exemple du Sonostron®. L'alliage manganèse-cuivre peut être du type Z9225, Z9240, Z8861 ou encore Z9000. Le pourcentage massique de manganèse peut être compris entre 50 et 54%. Le pourcentage massique de cuivre peut être compris entre 38 et 42%. Le pourcentage massique d'aluminium peut être compris entre 3 et 5%. Le pourcentage massique de fer peut être compris entre 2 et 4%. Le pourcentage massique de nickel peut être compris entre 0,5 et 2%. D'éventuels autres constituants étant présents en pourcentages massiques individuels inférieurs à 1%.

Dans un mode de réalisation, le matériau comprend un alliage cuivre-aluminium-manganèse à effet mémoire, par exemple de type maxidamp®.

Au moins un élément de bague comprend en outre un matériau additionnel d'amortissement disposé dans une ou plusieurs parties creuses ménagées dans ledit élément. Le matériau additionnel peut comprendre des particules ou des molécules dont la friction provoquée par les vibrations du matériau environnant transforme, au moins en partie, l'énergie vibratoire en chaleur. Le matériau additionnel peut comprendre du sable. Le sable peut comprendre au moins en partie le sable utilisé dans le noyau du moule de fonderie pour la formation de la partie creuse de l'élément de bague destinée à contenir le matériau additionnel, le sable de fonderie étant laissé volontairement après refroidissement du métal de l'élément de bague. La sable peut être au moins en partie du sable rapporté dans la partie creuse de l'élément de bague.

Dans un mode de réalisation, le matériau additionnel comprend un polymère, par exemple une mousse polyuréthane.

Dans un mode de réalisation, le matériau additionnel comprend une mousse métallique.

Dans un mode de réalisation, le matériau additionnel comprend une pâte de silicone introduite par au moins un trou dans la partie creuse après retrait du sable de fonderie.

Dans un mode de réalisation, le matériau additionnel comprend du ciment. Le ciment peut être chargé ou non d'un autre matériau, par exemple un matériau favorisant l'amortissement des ondes acoustiques, par exemple un additif sous forme fibreuse ou granulaire.

Dans un mode de réalisation, le matériau additionnel comprend du plomb.

Le dispositif peut comprendre un moteur assurant la rotation d'une bague par rapport à l'autre.

Le dispositif peut comprendre un système de détection du déplacement angulaire de la bague tournante.

Dans un mode de réalisation, le dispositif de palier à roulement comprend une bague extérieure pourvue d'un ou plusieurs éléments, une bague intérieure pourvue d'un ou plusieurs éléments, les bagues extérieure et intérieure comprenant chacune au moins un chemin de roulement, intégré ou rapporté, pour des éléments roulants disposés entre lesdites bagues au contact des chemins de roulement, au moins un élément de bague comprenant en outre un matériau additionnel d'amortissement disposé dans une ou plusieurs parties creuses ménagées dans ledit élément. Ledit élément peut être annulaire et/ou métallique. Ledit élément peut comprendre une demi bague de forme annulaire.

Lorsque les chemins de roulement d'au moins l'une des bagues extérieure et intérieure sont rapportés, ils peuvent avantageusement être réalisés sous la forme de fils annulaires rapportés, réalisés par exemple en acier traité. Ces fils annulaires présentent avantageusement une section transversale sensiblement circulaire, à l'exception d'une concavité formant un chemin de roulement.

Lorsque les chemins de roulement d'au moins l'une des bagues extérieure et intérieure sont intégrés, ils peuvent, par exemple, être usinés directement sur ladite bague du roulement de façon à former un chemin de roulement pour les éléments roulants, par exemple de forme toroïdale lorsque des billes sont utilisées comme éléments roulants.

Un procédé de fabrication d'au moins un élément de bague pour palier à roulement, peut comprendre les étapes dans lesquelles on moule un élément de bague en réservant au moins une partie creuse dans ledit élément de bague, ladite partie creuse étant remplie d'un matériau de remplissage. On remplit le moule d'un alliage métallique destiné à former ledit élément de bague. On peut ensuite, soit obturer les trous mettant en communication l'alvéole avec l'extérieur en y laissant le matériau de remplissage, par exemple du sable de fonderie, soit procéder au retrait du matériau de remplissage de fonderie et à son remplacement par un matériau amortisseur.

Un appareil d'imagerie médicale peut comprendre un palier à roulement tel que décrit ci-dessus, disposé entre une partie non tournante et une partie tournante. La partie tournante peut supporter des capteurs. L'appareil peut être du type scanner ou appareil à résonance magnétique nucléaire.

Grâce à cela, les bruits de fonctionnement de l'appareil sont considérablement réduits. La masse de la partie tournante n'est pas sensiblement modifiée. La réduction du bruit de fonctionnement accroît le confort et réduit la fatigue du patient et du personnel médical.

La présente invention sera mieux comprise à l'étude de la description détaillée de quelques modes de réalisation pris à titre d'exemples nullement limitatifs et illustrés par les dessins annexés, sur lesquels :

- la figure 1 est une demi-vue en coupe axiale d'un palier à roulement selon un mode de réalisation de l'invention ;
- la figure 2 est une demi-vue en coupe axiale d'un palier à roulement selon un autre mode de réalisation ; et
- la figure 3 est une demi-vue en coupe axiale d'une bague en cours de moulage.

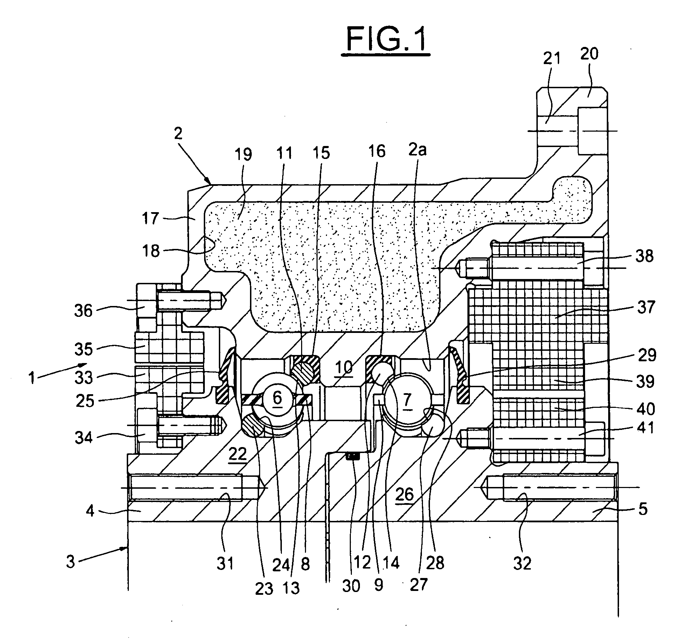

Comme on peut le voir sur la figure 1, le palier à roulement 1 comprend une bague extérieure 2, une bague intérieure 3 comprenant deux parties 4 et 5, et deux rangées d'éléments roulants 6 et 7, par exemple des billes disposées entre les bagues extérieure 2 et intérieure 3. Des cages 8 et 9 maintiennent respectivement l'espacement circonférentiel des éléments roulants 6 et 7.

La bague extérieure 2 comporte un alésage 2a séparé en deux parties sensiblement égales par une nervure 10 en saillie radialement vers l'intérieur. La bague extérieure 2 comprend également deux fils annulaires rapportés 11 et 12 formant des chemins de roulement toroïdaux 13 et 14, respectivement pour les éléments roulants 6 et 7. Les fils 11 et 12 présentent une section transversale sensiblement circulaire, à l'exception d'une concavité formant les chemins de roulement toroïdaux 13 et 14. Les fils 11 et 12 peuvent être réalisés en acier traité et roulés sur eux-mêmes pour former un anneau à bouts jointifs. La bague extérieure 2 est également munie de deux éléments d'amortissement 15 et 16, par exemple comprenant un élastomère. Les éléments d'amortissement 15 et 16 présentent une forme annulaire et sont disposés en contact avec l'alésage 2a et la nervure 10 d'un côté, et en contact avec le fil 11, 12 du côté opposé. Les éléments amortisseurs 15 et 16 sont disposés d'un côté et de l'autre de la nervure 10.

Le corps principal 17 de la bague extérieure 2 comporte également une cavité intérieure 18 annulaire ou présentant plusieurs alvéoles en arc de cercle séparées les unes des autres. La cavité 18 laisse subsister des parois du corps 17 d'épaisseur suffisante. La cavité 18 est remplie d'un matériau amortisseur de vibrations 19. La nervure 10 peut être monobloc avec le corps 17. On entend par « corps » une partie principale de la bague supportant, directement ou indirectement, au moins un chemin de roulement. Le corps peut être une pièce de forme générale annulaire.

Le matériau 19 peut comprendre du sable de fonderie, par exemple à base de silice, utilisé pour le moulage du corps 17 et laissé en place après moulage, le cas échéant après rebouchage des trous du corps 17 permettant de maintenir en place le sable de fonderie lors de la coulée du matériau formant le corps 17.

Le sable de fonderie peut également être retiré et remplacé par un autre matériau amortisseur de vibrations, par exemple un autre sable, différent du sable utilisé initialement pour réaliser le moyeu du moule de fonderie. On peut également utiliser pour le matériau amortisseur 19 un polymère, par exemple une mousse polyuréthane ou une pâte silicone, ou bien un élastomère ou du caoutchouc. On peut également envisager comme matériau amortisseur du ciment, chargé ou non d'un autre matériau, par exemple un matériau de renforcement, sous forme de fibres ou de granules. Enfin, on peut envisager l'utilisation d'un métal, par exemple du plomb, pour le remplissage de la cavité 18. Une mousse métallique peut également être envisagée pour le remplissage des cavités 18. Dans le cas du ciment, on choisit de préférence un ciment présentant un coefficient d'amortissement vibratoire élevé, par exemple compris entre 0,01 et 0,6, de préférence supérieur à 0,1. Le sable peut également être choisi pour présenter un coefficient d'amortissement vibratoire élevé, par exemple compris entre 0,05 et 0,2, de préférence supérieur à 0,1. Le caoutchouc naturel peut présenter un coefficient d'amortissement vibratoire compris entre 0,03 et 0,5, par exemple de l'ordre de 0,04.

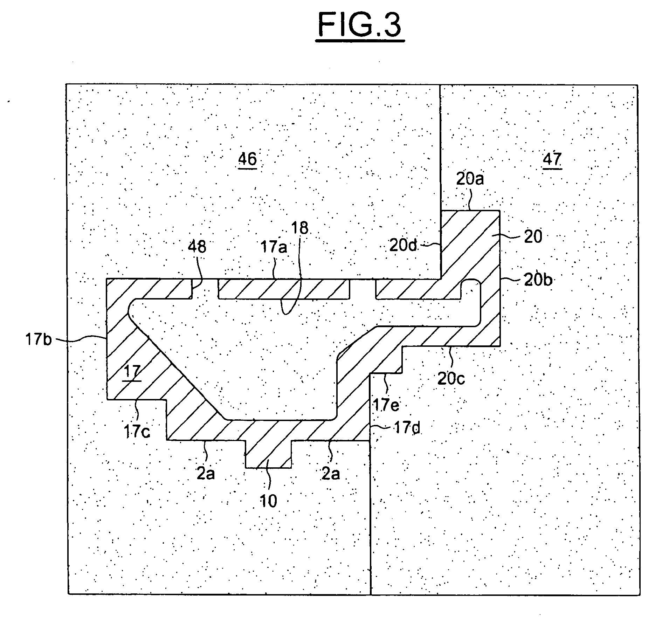

Le corps 17, qui comprend la nervure 10, peut être réalisé en un alliage métallique moulé, comme illustré sur la figure 3. Le matériau du corps 17 présente un coefficient d'amortissement vibratoire supérieur à 0,0001.

Le matériau du corps 17 peut être de la fonte, par exemple une fonte grise. On peut choisir une fonte de type GG40. La fonte, avec graphite lamellaire ou nodulaire, peut présenter un coefficient d'amortissement vibratoire compris entre 0,01 et 0,02, plus de 100 fois supérieur à celui de l'acier couramment utilisé pour la fabrication des bagues de roulement et plus de 140 fois supérieur à celui de l'aluminium parfois utilisé pour la fabrication des bagues de roulement.

Le matériau du corps 17 de la bague peut être un alliage manganèse-cuivre, dont une nuance est connue sous la dénomination Sonoston® fourni par Stone Manganese Marine Ltd. L'alliage manganèse-cuivre peut comprendre un pourcentage massique de manganèse compris entre 50 et 54%, un pourcentage massique de cuivre compris entre 38 et 41%, un pourcentage massique de fer compris entre 2 et 4%, de préférence entre 2,8 et 3,1 %, un pourcentage massique d'aluminium compris entre 3 et 5%, de préférence entre 3,9 et 4,4%, un pourcentage massique de nickel compris entre 0 et 2%, de préférence entre 0,8 et 1,4%, un pourcentage massique de zinc compris entre 0,1 et 1%, de préférence entre 0,15 et 0,6%, un pourcentage massique de silicium compris entre 0,01 et 0,3%, de préférence entre 0,08 et 0,16%, un pourcentage massique de carbone compris entre 0,01 et 0,1%, de préférence entre 0,015 et 0,05%, un pourcentage massique de plomb compris entre 0,01 et 0,05, de préférence entre 0,015 et 0,035%, et un pourcentage massique d'étain compris entre 0 et 0,05%, de préférence entre 0,01 et 0,03%. On peut utiliser les nuances Z9225, Z9240, Z8861, ou encore Z9000. L'alliage manganèse-cuivre peut être fondu et moulé, et présente d'excellente propriétés d'absorption du bruit et des vibrations.

Le matériau du corps 17 de bague peut être un alliage cuivre-aluminium-manganèse. Ce type d'alliage peut présenter un effet mémoire et un excellent amortissement des vibrations. Un exemple d'alliage CuAIMn est connu sous la dénomination Maxidamp®, notamment étudié par l'Université Technique de Clausthal, Allemagne.

Le corps 17 de la bague extérieure 2 comprend un collet 20, s'étendant radialement vers l'extérieur à partir d'une extrémité axiale du corps 17. Une pluralité de trous 21 peuvent être ménagés dans le collet 20 pour la fixation de la bague extérieure 2. La cavité 18 peut s'étendre axialement jusqu'au niveau du collet 20, ce qui accroît la capacité d'amortissement de la bague extérieure 2 et permet de conserver une épaisseur de paroi du corps 17 relativement constante, ce qui facilite l'opération de moulage.

La demi-bague 4 présente un corps 22 réalisé en acier et un fil 23 muni d'un chemin de roulement 24 en contact avec les éléments roulants 6, axialement à l'opposé du chemin de roulement 13 du fil 11. Le fil 23 est disposé en appui contre une surface radiale et contre une surface axiale du corps 22 de la demi-bague 4. Le corps 22 supporte un joint d'étanchéité 25 à lèvres frottant contre une surface sensiblement radiale du corps 17 de la bague extérieure 2. Le joint d'étanchéité 25 peut être muni d'un talon encastré dans une rainure ménagée dans le corps 22 et ouverte vers l'extérieur.

La demi-bague 5 comporte un corps 26, par exemple réalisé en acier, et un fil 27 sur lequel est ménagé un chemin de roulement 28 pour les éléments roulants 7. Le fil 27 est en appui contre une surface radiale et contre une surface axiale du corps 26. Chaque rangée d'éléments roulants 6 et 7 est en appui diagonal, entre d'une part un fil extérieur, respectivement 11, 12, disposé entre les plans radiaux passant par le centre des rangées d'éléments roulants 6 et 7 et un fil intérieur 23, 27 disposé à l'extérieur desdits plans radiaux. Le corps 26 de la demi-bague 5 supporte également un joint d'étanchéité 29 à lèvres frottant sur une surface radiale du corps 17 de la bague extérieure 2. Le joint d'étanchéité 29 comprend un talon disposé dans une rainure du corps 26, ouverte sur l'extérieur. L'étanchéité entre les demi-bagues intérieures 4 et 5 est assurée par un joint statique 30 disposé dans une rainure de la demi-bague 5 et en contact avec la demi-bague 4. L'étanchéité entre les demi-bagues 4 et 5 peut également être renforcée par une chicane formée par les formes respectives en contact des demi-bagues 4 et 5. Les fils 23 et 27 sont réalisés de la même manière que les fils 11 et 12 et peuvent également être en acier traité. Des éléments amortisseurs analogues aux éléments 15 et 16 paraissent également être prévus entre les fils 23, 27 et les demi-bagues correspondantes 4 et 5.

Dans le mode de réalisation illustré sur la figure 1, les demi-bagues 4 et 5 sont munies de perçages 31, 32, pouvant être filetés, et destinés à la fixation sur ou avec d'autres éléments. La demi-bague 4 supporte un anneau codeur 33, par exemple de type magnétique ou encore optique, fixé par des vis 34 au corps 22. La bague extérieure 2 supporte un bloc capteur 35, comprenant une ou plusieurs cellules de détection, ledit bloc étant fixé par des vis 36 au corps 17. Le codeur 33 et le bloc capteur 35 sont disposés l'un en face de l'autre avec un entrefer radial à l'extérieur de la zone des éléments roulants délimitée et protégée par les joints d'étanchéité 25 et 29. Le cas échéant, un capot de protection peut être prévu pour protéger le codeur 33 et le bloc capteur 35. Le roulement comporte ainsi des moyens aptes à détecter le déplacement angulaire de la bague tournante.

Du côté axialement opposé, le roulement est équipé d'un moteur couple à aimants permanents, par exemple samarium-cobalt. Le moteur couple comporte un élément 37 formant stator et fixé au corps 17 de la bague extérieure par des vis 38 et un élément intérieur 40 formant rotor et fixé à la demi-bague 5 par des vis 41. Le stator 37 comporte des noyaux en fer et des bobinages et le rotor comporte un anneau aimanté. Le moteur couple entraîne en rotation la bague intérieure 3 par rapport à la bague extérieure 2. Les éléments roulants 6 et 7 se déplacent entre les chemins de roulement, respectivement 13 et 24, 14 et 28 en étant en contact oblique avec lesdits chemins. Les fils formant les chemins de roulement sont réalisés en acier traité, afin d'offrir la dureté nécessaire à un bon fonctionnement. Les demi-bagues intérieures 4 et 5 peuvent être réalisées en acier non traité, ce qui s'avère économique.

La bague extérieure 2 assure un double amortissement des vibrations de par le matériau formant le corps 17 présentant un fort coefficient d'amortissement vibratoire et de par la présence du matériau amortisseur 19 dans le corps 17, d'où une très faible transmission des vibrations aux éléments de fixation qui peuvent être disposés dans les trous 21 du collet 20. Un amortissement supplémentaire est assuré par les anneaux souples 15 et 16 disposés entre les fils 11 et 12 d'une part et le corps 17 de la bague extérieure 2.

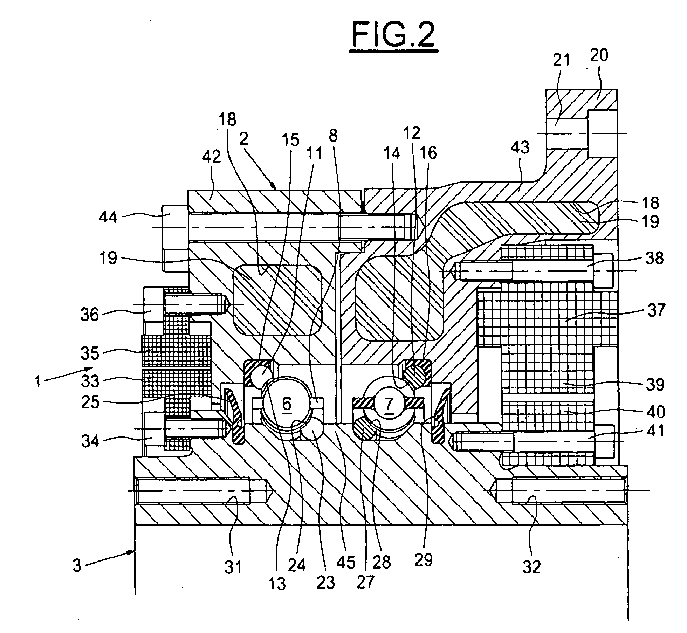

Sur la figure 2, les références des éléments semblables ont été conservées. Ce mode de réalisation se distingue du précédent par plusieurs caractéristiques, qui peuvent être prises seules ou en combinaison. La bague extérieure 2 est réalisée en deux demi-bagues 42 et 43, fixées l'une à l'autre par des vis 44. Chaque corps de demi-bague 42, 43 comprend une cavité 18 munie d'un matériau amortisseur 19.

Les fils extérieurs 11 et 12 et les anneaux souples 15 et 16 sont disposés axialement à l'opposé l'un de l'autre, en d'autres termes en-dehors de l'espace défini par les plans radiaux passant par le centre des éléments roulants 6 et 7. Inversement, les fils intérieurs 23 et 27 sont disposés à l'intérieur desdits plans radiaux.

La bague intérieure 3 est réalisée de façon monobloc, par exemple en acier, et comprend sur sa surface extérieure une nervure 45 disposée axialement sensiblement au milieu entre les éléments roulants 6 et 7. La nervure 45 sert d'appui aux fils intérieurs 23 et 27.

Selon l'application choisie, on peut prévoir une bague intérieure monobloc et deux demi-bagues extérieures ou l'inverse, comme sur la figure 1.

Sur la figure 3, est montré plus en détail un moule pour le moulage du corps 17 de la bague extérieure 2, illustré sur la figure 1. Le moule comprend une première partie 46, par exemple réalisée à base de sable et définissant la surface extérieure axiale 17a du corps 17, une surface radiale frontale 17b, un renfoncement 17c, l'alésage 2a qui forme l'alésage de la bague extérieure 2 et la nervure 10. Le moule comprend également une deuxième partie 47 définissant, par complémentarité de forme, la surface extérieure 20a du collet 20, une surface d'extrémité 20b du collet 20, qui forme également une surface radiale frontale du corps 17, et une surface intérieure 20c du collet 20. La surface frontale 20d du collet 20 opposée à la surface frontale 20b est assurée par la première partie 46 du moule. La surface 20d rejoint la surface extérieure 17a du corps 17. La deuxième partie 47 du moule rejoint la première partie à l'extrémité de l'alésage 2a et est en contact avec la surface radiale 17d du corps 17, les surfaces radiales 17d et intérieures 20c se rejoignant par l'intermédiaire d'une nervure 17e. Le corps 17 comprend en outre une pluralité d'ouvertures 48 ménagées à partir de la surface extérieure 17a et assurant une communication entre la cavité 18 et l'extérieur.

Au stade de fabrication illustré sur la figure 3, immédiatement après coulée de l'alliage métallique dans le moule, la cavité 18 et les ouvertures 48 sont remplies d'un noyau de moulage à base de sable. Après refroidissement, les première et deuxième parties 46 et 47 du moule sont brisées. Les ouvertures 48 sont dégagées. Dans une première variante, le noyau en sable occupant la cavité 18 est retiré par les ouvertures 48, puis remplacé par le matériau amortisseur 19. Dans une autre variante, les ouvertures 48 sont simplement dégagées puis obturées, par exemple avec un bouchon vissé ou brasé. Le noyau en sable forme alors le matériau amortisseur 19. La bague extérieure 2 peut ensuite être reprise au cours d'étapes d'usinage pour assurer la finition des surfaces.

Dans un mode de réalisation non représenté, la cavité 18 se présente sous la forme d'une rainure ouverte sur une face du corps 17, par exemple une face radiale. Un flasque d'obturation de la cavité 18 est alors prévu.

Bien entendu, ou pourrait également prévoir des cavités remplies d'un matériau amortisseur de vibrations dans la ou les bagues intérieures 3, 4, 5.

Le palier à roulement peut ensuite être monté en une partie mobile et un portique d'appareil d'imagerie médicale.

Grâce à l'invention, on forme une bague de roulement à effet amortisseur très élevé grâce au matériau formant le corps de ladite bague de roulement, ledit matériau possédant un coefficient d'amortissement vibratoire élevé. En outre, la bague peut assurer un effet d'amortissement multiple en prévoyant l'adjonction d'un matériau amortisseur supplémentaire, tel que le matériau 19 disposé à l'intérieur du corps 17. Un effet supplémentaire peut encore être obtenu par la présence des anneaux amortisseurs disposés entre les fils formant les chemins de roulement et le corps de la bague.

## Revendications

1. Dispositif de palier à roulement (1) comprenant une bague extérieure (2) dont le corps principal (17) comporte un ou plusieurs éléments, une bague intérieure (3) dont le corps principal comporte un ou plusieurs éléments, les bagues extérieure et intérieure comprenant chacune au moins un chemin de roulement, intégré ou rapporté, pour des éléments roulants (6) disposés entre lesdites bagues au contact des chemins de roulement, le corps principal d'au moins l'une des bagues intérieure et extérieure comportant une cavité intérieure annulaire ou présentant plusieurs alvéoles séparées les unes des autres, **caractérisé en ce que** le dit corps principal comprend un matériau métallique à coefficient d'amortissement vibratoire supérieur à 0,0001 et **en ce que** la cavité est remplie d'un matériau additionnel (19) d'amortissement.

2. Dispositif selon la revendication 1, dans lequel ledit matériau métallique comprend de la fonte grise lamellaire ou nodulaire.

3. Dispositif selon la revendication 1 ou 2, dans lequel ledit matériau métallique comprend un alliage à base de manganèse et de cuivre.

4. Dispositif selon l'une quelconque des revendications précédentes, dans lequel ledit matériau métallique comprend un alliage à base de cuivre, d'aluminium et manganèse, présentant un effet mémoire.

5. Dispositif selon la revendication 1, dans lequel le matériau additionnel comprend des particules ou des molécules dont la friction provoquée par les vibrations du matériau environnant transforme, au moins en partie, l'énergie vibratoire en chaleur.

6. Dispositif selon la revendication 5, lequel le matériau additionnel comprend du sable.

7. Dispositif selon la revendication 6, dans lequel le sable comprend au moins en partie un sable utilisé dans le noyau du moule de fonderie pour la formation de la ou des parties creuses destinées à contenir le matériau amortisseur additionnel et laissé volontairement après refroidissement du métal de l'élément de bague.

8. Dispositif selon la revendication 6, dans lequel le sable est rapporté dans la ou les parties creuses (18) après refroidissement du métal des bagues.

9. Dispositif selon l'une quelconque des revendications 1 à 8, dans lequel le matériau additionnel comprend un polymère.

10. Dispositif selon la revendication 9, dans lequel le matériau polymère comprend une mousse polyuréthane.

11. Dispositif selon la revendication 9 ou 10, dans lequel le matériau additionnel comprend une pâte silicone.

12. Dispositif selon les revendications 1 à 11, dans lequel le matériau additionnel comprend une mousse métallique.

13. Dispositif selon l'une quelconque des revendications 1 à 12, dans lequel le matériau additionnel comprend un ciment chargé ou non d'un ou plusieurs additifs sous forme fibreuse ou granulaire.

14. Dispositif selon l'une quelconque des revendications 1 à 13, dans lequel le matériau additionnel comprend du plomb.

15. Dispositif selon les revendications 1 à 14, comprenant un moteur pour la rotation d'une bague par rapport à l'autre.

16. Dispositif selon les revendications 1 à 15, comprenant un système de détection de déplacement angulaire de la bague tournante.

**17.** Dispositif selon l'une des revendications précédentes dans lequel les chemins de roulement des bagues extérieure et intérieure comprennent des fils annulaires (11, 12; 23,27) formant des chemins de roulement pour les éléments roulants.

**18.** Dispositif selon la revendication 17 dans lequel les fils annulaires sont réalisés en acier traité.

**19.** Appareil d'imagerie médicale comprenant un palier à roulement suivant l'une quelconque des revendications précédentes, le palier étant disposé entre une partie non tournante et une partie tournante.

**Claims**

**1.** Antifriction bearing device (1) comprising an outer ring (2) of which the main body (17) comprises one or more elements, an inner ring (3) of which the main body comprises one or more elements, the outer and inner rings each comprising at least one raceway, in-built or attached, for rolling elements (6) located between the said rings in contact with the raceways, the main body of at least one of the inner and outer rings comprising an annular internal cavity or having several pockets separated from one another, **characterized in that** the said main body comprises a metallic material with a vibration damping coefficient higher than 0.0001 and **in that** the cavity is filled with an additional damping material (19).

**2.** Device according to Claim 1, in which the said metallic material comprises flake-graphite grey cast iron or nodular cast iron.

**3.** Device according to Claim 1 or 2, in which the said metallic material comprises an alloy based on manganese and on copper.

**4.** Device according to any one of the preceding claims, in which the said metallic material comprises an alloy based on copper, aluminium and manganese, exhibiting memory effect.

**5.** Device according to Claim 1, in which the additional material comprises particles or molecules of which the friction brought about by vibrations of the surrounding material converts at least some of the vibrational energy into heat.

**6.** Device according to Claim 5, in which the additional material comprises sand.

**7.** Device according to Claim 6, in which the sand comprises, at least in part, a sand used in the core of the mould used for casting the hollow part or parts intended to contain the additional damping material and left deliberately in place after the metal of the ring element has cooled.

**8.** Device according to Claim 6, in which the sand is added to the hollow part or parts (18) after the metal of the rings has cooled.

**9.** Device according to any one of Claims 1 to 8, in which the additional material comprises a polymer.

**10.** Device according to Claim 9, in which the polymer material comprises a polyurethane foam.

**11.** Device according to Claim 9 or 10, in which the additional material comprises a silicone paste.

**12.** Device according to Claims 1 to 11, in which the additional material comprises a metallic foam.

**13.** Device according to any one of Claims 1 to 12, in which the additional material comprises a cement which may or may not be filled with one or more additives in fibrous or granular form.

**14.** Device according to any one of Claims 1 to 13, in which the additional material comprises lead.

**15.** Device according to Claims 1 to 14, comprising a motor for turning one ring in relation to the other.

**16.** Device according to Claims 1 to 15, comprising a system for detecting the angular displacement of the rotating ring.

**17.** Device according to one of the preceding claims, in which the raceways of the outer and inner rings comprise annular wires (11, 12; 23, 27) forming raceways for the rolling elements.

**18.** Device according to Claim 17, in which the annular wires are made of treated steel.

**19.** Medical imaging equipment comprising an antifriction bearing according to any one of the preceding claims, the bearing being positioned between a non-rotating part and a rotating part.

**Patentansprüche**

**1.** Lagervorrichtung mit einem Wälzlager (1), umfassend einen äußeren Ring (2), dessen Hauptkörper (17) ein oder mehrere Elemente umfasst, einen inneren Ring (3), dessen Hauptkörper ein oder mehrere Elemente umfasst, wobei der äußere und der innere Ring jeweils mindestens einen integrierten oder aufgesetzten Laufbahnkreis für Kugelelemente (6) umfassen, die zwischen den Ringen in Kontakt mit den Laufbahnkreisen angeordnet sind, wobei der Hauptkörper mindestens eines der inneren und äußeren Ringe einen inneren Hohlraum umfasst, der ringförmig ist oder mehrere voneinander getrennte Zellen aufweist, **dadurch gekennzeichnet, dass** der Hauptkörper ein metallisches Material mit einem Schwingungsdämpfungskoeffizienten von über 0,0001 aufweist und dass der Hohlraum mit einem zusätzlichen Dämpfungsmaterial (19) gefüllt ist.

2. Vorrichtung nach Anspruch 1, bei der das metallische Material Lamellengrauguss oder Kugelgrauguss umfasst.

3. Vorrichtung nach Anspruch 1 oder 2, bei dem das metallische Material eine Legierung auf Basis von Mangan und Kupfer umfasst.

4. Vorrichtung nach einem der vorhergehenden Ansprüche, bei der das metallische Material eine Legierung auf Basis von Kupfer, Aluminium und Mangan umfasst, die einen Gedächtniseffekt aufweist.

5. Vorrichtung nach Anspruch 1, bei der das zusätzliche Material Partikel oder Moleküle umfasst, deren durch die Schwingungen des umgebenden Materials hervorgerufene Reibung zumindest teilweise die Schwingungsenergie in Wärme umwandelt.

6. Vorrichtung nach Anspruch 5, bei der das zusätzliche Material Sand umfasst.

7. Vorrichtung nach Anspruch 6, bei der der Sand zumindest teilweise einen Sand umfasst, der im Kern der Gussform für die Bildung des oder der Hohlteile verwendet wurde, die dazu bestimmt sind, das zusätzliche Dämpfungsmaterial zu enthalten, und der absichtlich nach dem Abkühlen des Metalls des Ringelements belassen wurde.

8. Vorrichtung nach Anspruch 6, bei der der Sand in den oder die Hohlteile (18) nach dem Abkühlen des Metalls der Ringe eingebracht wird.

9. Vorrichtung nach einem der Ansprüche 1 bis 8, bei der das zusätzliche Material Polymer umfasst.

10. Vorrichtung nach Anspruch 9, bei der das Polymermaterial Polyurethanschaum umfasst.

11. Vorrichtung nach Anspruch 9 oder 10, bei der das zusätzliche Material eine Silikonpaste umfasst.

12. Vorrichtung nach den Ansprüchen 1 bis 11, bei der das zusätzliche Material einen metallischen Schaum umfasst.

13. Vorrichtung nach einem der Ansprüche 1 bis 12, bei der das zusätzliche Material einen Zement umfasst, der mit einem oder mehreren Zusatzstoffen in faseriger oder körniger Form beaufschlagt ist oder nicht.

14. Vorrichtung nach einem der Ansprüche 1 bis 13, bei der das zusätzliche Material Blei umfasst.

15. Vorrichtung nach den Ansprüchen 1 bis 14, umfassend einen Motor für die Drehung eines Ringes in Bezug zum anderen.

16. Vorrichtung nach den Ansprüchen 1 bis 15, umfassend ein System zur Erfassung einer Winkelbewegung des rotierenden Ringes.

17. Vorrichtung nach einem der vorhergehenden Ansprüche, bei der die Laufbahnkreise der äußeren und inneren Ringe ringförmige Drähte (11, 12; 23, 27) umfassen, die Laufbahnkreise für die Kugelemente bilden.

18. Vorrichtung nach Anspruch 17, bei der die ringförmigen Drähte aus bearbeitetem Stahl hergestellt sind.

19. Gerät zur medizinischen Bildgebung, umfassend ein Wälzlager nach einem der vorhergehenden Ansprüche, wobei das Lager zwischen einem nicht drehenden und einem drehenden Teil angeordnet ist.

# FIG.1

## FIG.2

EP 1 956 257 B1

# FIG.3

EP 1 956 257 B1

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 4458959 A
- EP 127879 A

- US 20058274 B